# EUROPÄISCHE PATENTSCHRIFT

(11) **EP 3 718 390 B1**
(45) Veröffentlichungstag und Bekanntmachung des Hinweises auf die Patenterteilung: **29.03.2023**
(21) Anmeldenummer: 19166614.8
(22) Anmeldetag: 01.04.2019
(51) Int. Cl.: A01D 34/86

(54) **AUSLEGERMÄHKOPF ZUM ANBAU AN EIN NUTZFAHRZEUG**
BOOM MOWER HEAD FOR MOUNTING ON A COMMERCIAL VEHICLE
TÊTE FAUCHEUSE À BRAS DESTINÉE AU MONTAGE SUR UN VÉHICULE UTILITAIRE

(43) Veröffentlichungstag der Anmeldung: 07.10.2020
(73) Patentinhaber: Schelling Nutzfahrzeuge GmbH, 26203 Wardenburg (DE)
(72) Erfinder: Tacke, Hermann, 49419 Wagenfeld (DE)
(74) Vertreter: Jabbusch, Matthias

(56) Entgegenhaltungen:
- EP-A2- 0 057 936
- WO-A1-94/01994
- DE-A1- 2 639 519
- DE-A1- 4 332 527
- GB-A- 1 591 489

## Beschreibung

Die Erfindung betrifft einen Auslegermähkopf zum Anbau an ein Nutzfahrzeug, mit wenigstens einem Schneidwerk, welches wenigstens zwei in einem Mähgehäuse laufende Messerscheiben aufweist, wobei das Mähgehäuse wenigstens eine zur Mährichtung hin aufgestellte Einlassöffnung aufweist.

Bekannte Auslegermähköpfe dienen der Pflege der Bankette von Straßen und Wegen sowie ganzer Böschungen an Dämmen, Wällen oder Gräben durch regelmäßiges Mähen ihrer Vegetation. Dabei bewirkt der regelmäßige Schnitt die Ausbildung niedriger und strapazierfähiger Pflanzenteppiche, mit denen die Verkehrssicherheit durch eine Verbreiterung der befahrbaren Fläche und durch Schaffung verbreiterter Sichtkorridore maßgeblich verbessert ist. Es ist weiter bekannt, dass die Dichtigkeit und Strapazierfähigkeit derartiger Pflanzenteppiche auch von der Anzahl der auf ihnen anzutreffenden Pflanzen- und Tierarten abhängig ist. Moderne und leistungsstarke Auslegermähköpfe haben jedoch den Nachteil, dass sie die Artenvielfalt auf den mit ihnen bearbeiteten Mähflächen beeinträchtigen, indem das Mähgut mitsamt seinen Fruchtständen aufgenommen und abtransportiert wird. Zudem werden auf den Mähflächen lebende Kleintiere, insbesondere Insekten, aber auch Kriechtiere und Säugetiere vom Schneidwerk regelmäßig in einer todbringenden Weise erfasst und zusammen mit dem Mähgut abgeführt. Aus der deutschen Offenlegungsschrift DE 43 32 527 A1 ist ein gattungsgemäßer Auslegermähkopf bekannt, in dessen nach unten offenen Mähgehäuse vier in einer Reihe angeordnete Rotationsschneidwerke angeordnet sind, mit denen das Mähgut abgeschnitten und unzerkleinert über eine Auswurföffnung des Mähgehäuses abgeführt wird.

Der Erfindung liegt deshalb die Aufgabe zugrunde, einen Auslegermähkopf der eingangs genannten Gattung aufzuzeigen, mit welchem die Artenvielfalt auf den Mähflächen weitgehend erhalten bleibt.

Diese Aufgabe ist erfindungsgemäß durch einen Auslegermähkopf mit den Merkmalen des Patentanspruches 1 gelöst. Vorteilhafte Weiterbildungen der Erfindung sind in den Unteransprüchen angegeben.

Der erfindungsgemäße Auslegermähkopf zum Anbau an ein Nutzfahrzeug zeichnet sich dadurch aus, das das Mähgehäuse einen Gehäuseboden aufweist, und dass der Gehäuseboden eine geschlossene Bodenplatte sowie einen unterhalb der Messerscheiben verlaufenden Fingerbalken aufweist, dessen Finger auf die Einlassöffnung des Mähgehäuses zeigen. Damit weist das Mähgehäuse einen im Wesentlichen geschlossenen Gehäuseboden mit Gehäuseöffnungen auf, die durch die Fingerzwischenräume des Fingerbalkens ausgebildet sind. Im Mähbetrieb schieben sich die Finger des Fingerbalkens kammartig zwischen die Stängel und Halme der zu mähenden Vegetation und zwingen diese in einer unentrinnbaren Weise in die Schneiden der Messerscheiben hinein. Die Finger des Fingerbalkens fungieren dabei als Widerlager, in denen vorteilhaft große Schneidkräfte aufgenommen werden können. Der Fingerbalken ermöglicht somit das Fahren kleinerer Schnittgeschwindigkeiten, wodurch an den rotierenden Messerscheiben auftretende Wirbelströmungen vorteilhaft schwach sind. Unmittelbar nach dem Schnitt des Mähgutes ist mit der geschlossenen Bodenplatte verhindert, dass die abgemähten Flächen Wirbelströmungen ausgesetzt werden, von denen zu Boden gefallene Samen und nach unten geflüchtete Tiere mitgerissen werden.

Nach einer ersten Weiterbildung der Erfindung sind der Fingerbalken und die Bodenplatte einstückig ausgebildet. Die Einstückigkeit bietet eine konstruktiv besonders einfache Möglichkeit zur planflächigen Ausbildung des Gehäusebodens. Grundsätzlich liegt es jedoch im Rahmen der Erfindung, zwischen dem Fingerbalken und der Bodenplatte eine lösbare Verbindung vorzusehen, die vorzugsweise einen Austausch eines beschädigten Fingerbalkens ermöglicht.

Nach einer nächsten Weiterbildung der Erfindung weisen die Finger des Fingerbalkens in Mährichtung bis vor die Messer der Messerscheiben ragende Fingerspitzen auf. Die Fingerspitzen schützen die Schneiden der Messerscheiben vor Beschädigungen durch Steine oder Metallteile, die beispielsweise in der zu mähenden Vegetation eingewachsen sind.

Zur Ausbildung einer maximal großen geschlossenen Bodenplatte wird vorgeschlagen, dass der Fingerbalken in Mährichtung vor den Drehachsen der Messerscheiben angeordnet ist. Dabei ist es für eine gute Schneidleistung völlig ausreichend, wenn mit dem Fingerbalken die Schneiden der Messerscheiben auf einer Viertelumdrehung bis hin zu einer Drittelumdrehung freigegeben sind.

Für einen Abtransport des Mähgutes aus dem Mähgehäuse heraus weist dieses eine Austrittsöffnung auf, an die ein Absaugrohr angeschlossen ist, wobei das Absaugrohr die Austrittsöffnung umgebende Luftansaugöffnungen hat. Mit den Luftansaugöffnungen ist vorteilhaft verhindert, dass das Absaugrohr seine Luft über das Mähgehäuse ansaugen kann und vor die Einlassöffnung des Mähgehäuses gelangende Samen und Tiere nicht mehr wegfliegen oder sich nicht mehr ihrer Schwerkraft folgend einem Abtransport über den Materialstrom entziehen können.

Nach einer anderen Weiterbildung der Erfindung ist den Messerscheiben eine Häckselmesserwelle nachgeschaltet, mit der das Mähgut auf ein gut fließfähiges Maß zerkleinert und mechanisch bis vor die Austrittsöffnung des Mähgehäuses geworfen wird, wo es dann von der Sogwirkung des Absaugrohres erfasst wird.

Um eine Schnitthöhe sicherzustellen, die den Tieren die Flucht vor den Schneidwerkzeugen des erfindungsgemäßen Auslegermähkopfes ermöglicht, ist vorgesehen, dass das Mähgehäuse an seinem Gehäuseboden ausgebildete Gleitkufen aufweist. Verglichen mit Radkörpern weisen die Gleitkufen vorteilhaft keine verschleißbehafteten Radlager auf und ermöglichen aufgrund ihrer Längserstreckung ein nahezu beschädigungsfreies Überfahren der Mähflächen.

Nach einer ganz besonders vorteilhaften Weiterbildung der Erfindung wird vorgeschlagen, dass in der Einlassöffnung des Mähgehäuses wenigstens ein Kettenvorhang angeordnet ist, dessen Kettenglieder eine Vielzahl von Abstreifern aufweisen. Während der Kettenvorhang bei den Tieren, die sich in der zu mähenden Vegetation aufhalten, einen Fluchtinstinkt auslöst, bewirken die Abstreifer bei der Vegetation ein Abreißen und Zubodenfallen der an den Halmen und Stängeln ausgebildeten Fruchtstände.

Um das Schneidwerk davor zu schützen, dass Fremdkörper zu einem Blockieren der Messerscheiben führen, weist das Schneidwerk vorzugsweise an seinen Messerscheiben schwenkbeweglich angelenkte Messer auf. Vorzugsweise werden die Messerscheiben über die Bordhydraulik des den Auslegermähkopf führenden Nutzfahrzeuges angetrieben.

Um den mechanischen Abtransport des Mähgutes aus dem Mähgehäuse heraus zu verbessern, weist das Schneidwerk an seinen Messerscheiben angeordnete Mähgutmitnehmer auf. Derartige Mähgutmitnehmer sind beispielsweise als achsnahe Mitnehmerleisten ausgeführt, die auf der dem Gehäuseboden abgewandten Seite der Messerscheiben ausgebildet sind. Somit werden von den Mähgutmitnehmern generierte Wirbelströmungen von den Messerscheiben zu den Mähflächen hin abgeschirmt.

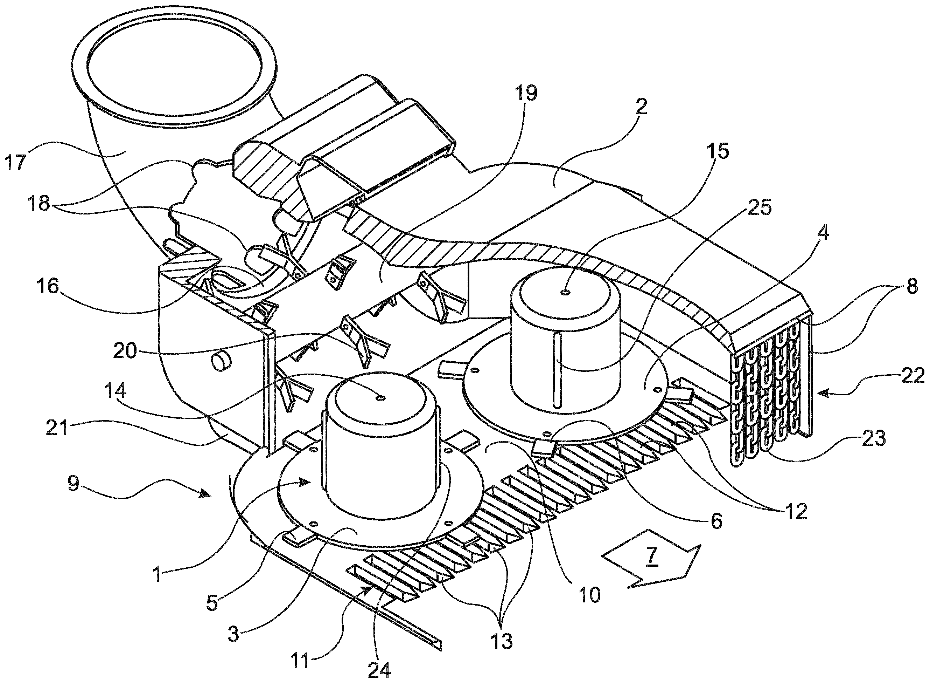

Ein Ausführungsbeispiel der Erfindung, aus dem sich weitere erfinderische Merkmale ergeben, ist in der Zeichnung dargestellt.

Die einzige Figur zeigt eine perspektivische Ansicht eines erfindungsgemäßen Auslegermähkopfes zum Anbau an ein nicht dargestelltes Nutzfahrzeug. Der erfindungsgemäße Auslegermähkopf hat ein Schneidwerk 1, welches zwei in einem Mähgehäuse 2 laufende Messerscheiben 3, 4 mit jeweils vier Messern 5, 6 aufweist. Das Mähgehäuse 2 weist eine zur Mährichtung gemäß Pfeil 7 ausgerichtete Einlassöffnung 8 sowie einen Gehäuseboden 9 auf, der eine geschlossene Bodenplatte 10 sowie einen unterhalb der Messerscheiben 3, 4 verlaufenden Fingerbalken 11 aufweist, dessen Finger 12 auf die Einlassöffnung 8 zeigen. In dem dargestellten Ausführungsbeispiel sind der Fingerbalken 11 und die Bodenplatte 10 einstückig ausgebildet. Die Finger 12 des Fingerbalkens 11 weisen in Mährichtung gemäß Pfeil 7 bis vor die Messer 5, 6 der Messerscheiben 3, 4 ragende Fingerspitzen 13 auf. In Mährichtung gemäß Pfeil 7 ist der Fingerbalken 11 gänzlich vor den Drehachsen 14, 15 der Messerscheiben 3, 4 angeordnet. Für den Abtransport des Mähgutes aus dem Mähgehäuse 2 heraus weist dieses eine Austrittsöffnung 16 auf, an der ein Absaugrohr 17 angeschlossen ist, welches die Austrittsöffnung 16 umgebende Luftansaugöffnungen 18 aufweist. Zur Beschickung des Absaugrohres 17 mit Mähgut ist den Messerscheiben 3, 4 eine Häckselmesserwelle 19 mit Schlegelmessern 20 nachgeschaltet. An seinem Gehäuseboden 9 weist das Mähgehäuse 2 zwei Gleitkufen 21 auf. In der Einlassöffnung 8 des Mähgehäuses 2 ist ein Kettenvorhang 22 angeordnet, dessen Kettenglieder 23 eine Vielzahl von Abstreifern (nicht dargestellt) aufweisen. Für einen verbesserten Abtransport des Mähgutes weist das Schneidwerk 1 an seinen Messerscheiben 3, 4 angeordnete leistenförmige Mähgutmitnehmer 24, 25 auf.

### Bezuaszahlenliste:

- 1: Schneidwerk
- 2: Mähgehäuse
- 3: Messerscheibe
- 4: Messerscheibe
- 5: Messer
- 6: Messer
- 7: Pfeil (Mährichtung)
- 8: Einlassöffnung
- 9: Gehäuseboden
- 10: Bodenplatte
- 11: Fingerbalken
- 12: Finger
- 13: Fingerspitzen
- 14: Drehachse
- 15: Drehachse
- 16: Austrittsöffnung
- 17: Absaugrohr
- 18: Luftansaugöffnungen
- 19: Häckselmesserwelle
- 20: Schlegelmesser
- 21: Gleitkufen
- 22: Kettenvorhang
- 23: Kettenglieder
- 24: Mähgutmitnehmer
- 25: Mähgutmitnehmer

## Patentansprüche

1. Auslegermähkopf zum Anbau an ein Nutzfahrzeug, mit wenigstens einem Schneidwerk, welches wenigstens zwei in einem Mähgehäuse laufende Messerscheiben aufweist, wobei das Mähgehäuse wenigstens eine zur Mährichtung hin aufgestellte Einlassöffnung aufweist,
**dadurch gekennzeichnet,**
**dass** das Mähgehäuse (2) einen Gehäuseboden (9) aufweist, und
**dass** der Gehäuseboden (9) eine geschlossene Bodenplatte (10) sowie einen unterhalb der Messerscheiben (3, 4) verlaufenden Fingerbalken (11) aufweist, dessen Finger (12) auf die Einlassöffnung (8) des Mähgehäuses (2) zeigen.

2. Auslegermähkopf nach Anspruch 1, **dadurch gekennzeichnet, dass** der Fingerbalken (11) und die Bodenplatte (10) einstückig ausgebildet sind.

3. Auslegermähkopf nach Anspruch 1 oder 2, **dadurch gekennzeichnet, dass** die Finger (12) des Fingerbalkens (11) in Mährichtung bis vor die Messer (5, 6) der Messerscheiben (3, 4) ragende Fingerspitzen (13) aufweisen.

4. Auslegermähkopf nach einem der Ansprüche 1 bis 3, **dadurch gekennzeichnet, dass** der Fingerbalken (11) in Mährichtung vor den Drehachsen (14, 15) der Messerscheiben (3, 4) angeordnet ist.

5. Auslegermähkopf nach einem der Ansprüche 1 bis 4, **dadurch gekennzeichnet, dass** das Mähgehäuse (2) eine Austrittsöffnung (16) aufweist, an der ein Absaugrohr (17) angeschlossen ist, wobei das Absaugrohr (17) die Austrittsöffnung (16) umgebende Luftansaugöffnungen (18) hat.

6. Auslegermähkopf nach einem der Ansprüche 1 bis 5, **dadurch gekennzeichnet, dass** den Messerscheiben (3, 4) eine Häckselmesserwelle (19) nachgeschaltet ist.

7. Auslegermähkopf nach einem der Ansprüche 1 bis 6, **dadurch gekennzeichnet, dass** das Mähgehäuse (2) an seinem Gehäuseboden (9) ausgebildete Gleitkufen (21) aufweist.

8. Auslegermähkopf nach einem der Ansprüche 1 bis 7, **dadurch gekennzeichnet, dass** in der Einlassöffnung (8) des Mähgehäuses (2) wenigstens ein Kettenvorhang (22) angeordnet ist, dessen Kettenglieder (23) eine Vielzahl von Abstreifern aufweisen.

9. Auslegermähkopf nach einem der Ansprüche 1 bis 8, **dadurch gekennzeichnet, dass** das Schneidwerk (1) an seinen Messerscheiben (3, 4) schwenkbeweglich angelenkte Messer (5, 6) aufweist.

10. Auslegermähkopf nach einem der Ansprüche 1 bis 9, **dadurch gekennzeichnet, dass** das Schneidwerk (1) an seinen Messerscheiben (3, 4) angeordnete Mähgutmitnehmer (24, 25) aufweist.

## Claims

1. A boom mower head for mounting on a commercial vehicle, with at least one cutting unit which has at least two cutter blade discs running in a mower housing, the mower housing having at least one inlet opening set up towards the mowing direction,
**characterized in**
**that** the mower housing (2) has a housing base (9), and
in that the housing base (9) has a closed base plate (10) and a finger cutter bar (11) which extends beneath the cutter blade discs (3, 4) and the fingers (12) of which point to the inlet opening (8) of the mower housing (2).

2. The boom mower head according to claim 1, **characterized in that** the finger cutter bar (11) and the base plate (10) are formed in one piece.

3. The boom mower head according to claim 1 or 2, **characterized in that** the fingers (12) of the finger cutter bar (11) have finger tips (13) projecting in the mowing direction beyond the cutter blades (5, 6) of the cutter blade discs (3, 4).

4. The boom mower head according to any one of claims 1 to 3, **characterized in that** the finger cutter bar (11) is arranged in front of the axes of rotation (14, 15) of the cutter blade discs (3, 4) in the mowing direction.

5. The boom mower head according to any one of claims 1 to 4, **characterized in that** the mower housing (2) has an outlet opening (16) to which a suction pipe (17) is connected, the suction pipe (17) having air intake openings (18) surrounding the outlet opening (16).

6. The boom mower head according to any one of claims 1 to 5, **characterized in that** a shredder blade shaft (19) is connected downstream of the cutter blade discs (3, 4) .

7. The boom mower head according to any one of claims 1 to 6, **characterized in that** the mower housing (2) has skids (21) formed on its housing base (9).

8. The boom mower head according to any one of claims 1 to 7, **characterized in that** at least one chain curtain (22) is arranged in the inlet opening (8) of the mower housing (2), the chain links (23) of which chain curtain have a plurality of scrapers.

9. The boom mower head according to any one of claims 1 to 8, **characterized in that** the cutter unit (1) has pivotally hinged cutter blades (5, 6) on its cutter blade discs (3, 4).

10. The boom mower head according to one of the claims 1 to 9, **characterized in that** the cutting unit (1) has mowed material drivers (24, 25) arranged on its cutter blade discs (3, 4).

## Revendications

1. Tête faucheuse à bras destiné au montage sur un véhicule utilitaire avec au moins un mécanisme de coupe, lequel comporte au moins deux disques à couteaux fonctionnant dans un carter de fauchage, sachant que le carter de fauchage comporte au moins une ouverture d'entrée montée en direction de fauchage,
**caractérisée en ce que**
le carter de fauchage (2) comporte un fond de carter (9), et
**en ce que** le fond de carter (9) comporte une plaque de fond (10) fermée ainsi qu'une barre à doigts (11) passant en dessous des disques à couteaux (3, 4), dont les doigts (12) sont dirigés vers l'ouverture d'entrée (8) du carter de fauchage (2).

2. Tête faucheuse à bras selon la revendication 1, **caractérisée en ce que** la barre à doigts (11) et la plaque de fond (10) sont constituées en une seule pièce.

3. Tête faucheuse à bras selon la revendication 1 ou 2, **caractérisée en ce que** les doigts (12) de la barre à doigts (11) comportent des pointes de doigt (13) faisant saillie en direction de fauchage jusque devant les couteaux (5, 6) des disques à couteaux (3, 4).

4. Tête faucheuse à bras selon l'une quelconque des revendications 1 à 3, **caractérisée en ce que** la barre à doigts (11) est disposée en direction de fauchage devant les axes de rotation (14, 15) des disques à couteaux (3, 4).

5. Tête faucheuse à bras selon l'une quelconque des revendications 1 à 4, **caractérisée en ce que** le carter de fauchage (2) comporte une ouverture de sortie (16) à laquelle est raccordée un conduit d'extraction (17), sachant que le conduit d'extraction (17) possède des ouvertures d'aspiration d'air (18) entourant l'ouverture de sortie (16).

6. Tête faucheuse à bras selon l'une quelconque des revendication 1 à 5, **caractérisée en ce qu'**un arbre à couteaux de hachage (19) est monté en aval des disques à couteaux (3, 4).

7. Tête faucheuse à bras selon l'une quelconque des revendications 1 à 6, **caractérisée en ce que** le carter de fauchage (2) comporte des patins de glissement (21) constitués sur son fond de carter (9).

8. Tête faucheuse à bras selon l'une quelconque des revendications 1 à 7, **caractérisée en ce qu'**au moins un rideau de chaînes (22) est disposé dans l'ouverture d'entrée (8) du carter de fauchage (2), dont les maillons de chaîne (23) comportent une pluralité de racleurs.

9. Tête faucheuse à bras selon l'une quelconque des revendications 1 à 8, **caractérisée en ce que** le mécanisme de coupe (1) comporte des couteaux (5, 6) articulés en mouvement pivotant sur ses disques à couteaux (3, 4).

10. Tête faucheuse à bras selon l'une quelconque des revendications 1 à 9, **caractérisée en ce que** le mécanisme de coupe (1) comporte des entraîneurs de matières à faucher (24, 25) disposés sur ses disques à couteaux (3, 4).
